# EUROPÄISCHE PATENTANMELDUNG

(11) **EP 4 722 041 A1**
(43) Veröffentlichungstag der Anmeldung: **08.04.2026**
(21) Anmeldenummer: 25203554.8
(22) Anmeldetag: 22.09.2025
(51) Int. Cl.: B60Q 1/04, B60Q 1/26

(54) **ZUSAMMENBAU UND VERFAHREN ZUR MONTAGE VON SCHEINWERFERN UND EINER STOSSSTANGE EINES FAHRZEUGS**

(30) Priorität: 27.09.2024 CZ 20240372
(71) Anmelder: Skoda Auto a.s., 293 01 Mladá Boleslav (CZ)
(72) Erfinder: Horváth, Josef, 29301 Mladá Boleslav, CZ (CZ); Knebl, Pavel, 29301 Mladá Boleslav (CZ); Stránský, Martin, 29501 Mnichovo Hradiste (CZ)

(57) **Zusammenfassung**

Der Zusammenbau und das Verfahren zur Montage von Scheinwerfern (2) eines Fahrzeugs. Der Zusammenbau umfasst einen vorderen Rahmen (3), eine vordere Stoßstange (1) und zwei Scheinwerfer (2). Die Scheinwerfer (2) werden zunächst am Rahmen (3) mit einer Schnappverbindung befestigt, die auf der x-Achse und der z-Achse fix ist und auf der y-Achse beweglich ist, wo die x-Achse die Längsachse, die y-Achse die Querachse und die z-Achse die Vertikalachse ist. Danach wird die Stoßstange (1) am Rahmen (3) und an den Scheinwerfern (2) in Richtung der x-Achse von vorne nach hinten befestigt, und durch Aufsetzen der Stoßstange (1) zum Rahmen (3) und den Scheinwerfern (2) werden die Scheinwerfer (2) in Richtung der y-Achse zur x-Achse bewegt. Die Verschiebung der Scheinwerfer (2) bewirkt die Verbindung der Halterungen (12) der Stoßstange (2) und der Halterungen (22) der Scheinwerfer (2), die eine Kraft aufeinander ausüben. Die Scheinwerfer (2) werden dann in der zweiten Randlage am Rahmen (3) mit der Schraubverbindung befestigt, und die Stoßstange (1) wird ebenfalls am Rahmen (3) mit der Schraubverbindung befestigt.

## Beschreibung

### Technisches Sachgebiet

Die Erfindung fällt in den Bereich der Fahrzeugmontage, insbesondere der Montage von Scheinwerfern und Stoßstangen.

### Stand der Technik

Aus dem Stand der Technik sind verschiedene Zusammenbaue von Scheinwerfern und Stoßstangen für Fahrzeuge bekannt. Die Verfahren zu deren Montage verwenden verschiedene Montageelemente wie Schrauben, Halterungen, Klammern und Klipps. Die Scheinwerfer werden üblicherweise zuerst als erste Teile eingebaut und dann folgt die Installation der Stoßstange. Nach dem Einbau ergeben sich zwischen den Scheinwerfern und der Stoßstange Montagelücken, die gleichmäßig und möglichst gering sein müssen. Die korrekte Einstellung der Scheinwerfer und der Stoßstange zur Erzielung gleichmäßiger Montagelücken - die so genannte Passung - ist nicht nur aus ästhetischer Sicht wichtig, sondern sie ist auch für die korrekte Funktion der Aerodynamik, die Sicherheit und zur Vermeidung von Schäden an den Teilen untereinander (Abrieb) wichtig. Zu diesem Zweck werden an den Scheinwerfern und der Stoßstange Verbindungselemente angebracht, die ein Verschieben und Einstellen der einzelnen Teile ermöglichen.

Das Patent EP1060945 B1 beschreibt Scheinwerfer mit verstellbaren Befestigungselementen in Form von Steckstiften, die die Einstellung des Scheinwerfers gegenüber der Fahrzeugkarosserie vereinfachen. Die Montage der Stoßstange wird hier jedoch nicht behandelt, ebenso wenig wie die Bereitstellung geeigneter Lücken um den Stoßfänger herum.

Das Patent EP3548340 B1 beschreibt einen Zusammenbau von Stoßstangen und Scheinwerfern, der verformungsbeständig ist und angemessene Montagelücken aufweist, jedoch keine Lösung zur Vereinfachung des Prozesses der Passung darstellt.

Die Passung der Stoßstange und der Scheinwerfer ist nach dem Stand der Technik ein langwieriger Prozess, der die Produktionsgeschwindigkeit und -effizienz verringert. Es wäre von Vorteil, eine Lösung zu finden, die diesen Prozess vereinfacht und die Einstellung der Stoßstange und der Scheinwerfer effizienter macht und dazu beiträgt, dass die Montagelücken möglichst gering und gleichmäßig sind.

### Zusammenfassung der Erfindung

Die Mängel der aus dem Stand der Technik bekannten Lösungen werden gewissermaßen durch den Zusammenbau und das Verfahren zur Montage der Scheinwerfer und der Stoßstange eines Fahrzeugs beseitigt.

Der Zusammenbau umfasst einen vorderen Rahmen, eine vordere Stoßstange und zwei Scheinwerfer. Die Stoßstange umfasst ein erstes Positionierungselement zur Abgrenzung einer Position relativ zum Rahmen, und der Rahmen umfasst ein zweites Positionierungselement, das komplementär zum ersten Positionierungselement ist. Der Rahmen umfasst ferner für jeden Scheinwerfer mindestens ein Schnappelement des Rahmens zur Befestigung des Scheinwerfers und für jeden Scheinwerfer mindestens eine Montageöffnung für eine Montageschraube. Jeder Scheinwerfer umfasst mindestens ein Schnappelement des Scheinwerfers zur Verbindung mit dem Schnappelement des Rahmens und jeder Scheinwerfer umfasst ferner mindestens eine Montageöffnung für eine Montageschraube.

Die Verbindung des Schnappelements des Rahmens und des Schnappelements des Scheinwerfers ist nach dem Einrasten festsitzend in Richtung der x- und z-Achsen und beweglich in Richtung der y-Achse, wo die x-Achse die Längsachse, die y-Achse die Querachse und die z-Achse die Vertikalachse ist. Die Stoßstange umfasst ferner für jeden Scheinwerfer mindestens eine Halterung der Stoßstange zum Befestigen des Scheinwerfers und dessen Anziehen in Richtung der y-Achse zur x-Achse. Jeder Scheinwerfer umfasst mindestens eine Halterung des Scheinwerfers, die mit der Halterung der Stoßstange komplementär ist.

Der Fahrzeugrahmen ist standardmäßig eine feste Metalltragkonstruktion, an der andere Komponenten einschließlich Scheinwerfer und Stoßstange montiert werden. Es kann ein Teil der Karosserie sein, der den Motorraum von vorne und möglicherweise auch von den Seiten abgrenzt.

Die Scheinwerfer umfassen in der Regel Bauteile wie eine Lichtquelle, ein Spiegel, Elektronik, Dichtungen, durchsichtige Abdeckung, ein Gehäuse, das in der Regel aus Kunststoff besteht, Montageelemente zur Anbringung am Fahrzeug usw. Die Scheinwerfer werden in der Regel mit Schrauben und anderen Montageelementen (Klipps, Klammern, Halterungen usw.) am Fahrzeugrahmen befestigt. Die vorliegende Erfindung kann mit beliebigen Scheinwerfern verwendet werden.

Gemäß der vorliegenden Erfindung umfassen die Scheinwerfer mindestens ein Schnappelement und mindestens eine Montageöffnung für eine Schraube zur Verbindung mit dem Rahmen und der Stoßstange. Die Scheinwerfer können daher mit dem Rahmen und der Stoßstange durch eine Schnappverbindung, die in der x- und z-Achsenrichtung fest und in der y-Achsenrichtung beweglich ist, und durch eine Schraubverbindung, die nicht beweglich ist, verbunden werden. Das Schnappelement sowie die Öffnung für eine Schraube können insbesondere ein Bestandteil von der äußeren Scheinwerferabdeckung sein. Besonders vorteilhaft ist, wenn alle Schnappelemente aus einem Stück mit der äußeren Scheinwerferabdeckung gefertigt sind. Vorzugsweise gibt es mehr als ein Schnappelement an jedem Scheinwerfer, vorzugsweise mindestens drei. Der Rahmen umfasst dann eine entsprechende Anzahl von komplementären Schnappelementen.

In der vorliegenden Erfindung sind die x-, y- und z-Achsen nach den in der Automobilindustrie üblichen Standards ausgerichtet, die x-Achse ist daher eine Längsachse parallel zur Fahrtrichtung des Fahrzeugs, die y-Achse ist eine Rechts-Links-Querachse und die z-Achse ist eine Vertikalachse von oben nach unten. Bei den individuellen Scheinwerfern, dem Rahmen und der Stoßstange ist die Richtung dieser Achsen so ausgerichtet, als ob sie bereits am Fahrzeug montiert wären. Die X-Richtung ist also die Vorn-Hinten-Richtung und die Y-Richtung ist die Rechts-Links-Richtung.

Die Schnappverbindung des Scheinwerfers ist daher seitlich, in Richtung von links nach rechts und umgekehrt, beweglich und in Richtung vorwärts-rückwärts und aufwärts-abwärts ist sie fest. Wenn der Scheinwerfer in den Rahmen eingeschnappt ist, kann er in einem bestimmten Abstand, vorzugsweise in einem von beiden Seiten geschlossenen Abstand, nach links und rechts bewegt werden. Die Schnappverbindung (Englisch snap-in connection), definiert durch die Schnappelemente des Rahmens und des Scheinwerfers, ist eine mechanische Verbindung zweier Teile, bei der ein Teil (zum Beispiel mit Vorsprüngen, Rasten oder Laschen) in ein entsprechendes Gegenstück (zum Beispiel eine Öffnung oder eine Nut) des anderen Teils eingesetzt und dann durch elastische Verformung des Materials eingerastet wird. Diese Verbindung kann auseinandernehmbar oder nicht auseinandernehmbar sein. Vorteilhafterweise wird für die Schnappverbindung kein Werkzeug benötigt.

Die Scheinwerfer sind vorzugsweise für die Anordnung in zwei Stellungen konfiguriert - in die erste Randlage und in die zweite Randlage. Die Scheinwerfer umfassen auch eine Halterung des Scheinwerfers, die zum Führen des Scheinwerfers von einer ersten Randlage in eine zweite Randlage dient. Die Halterung des Scheinwerfers ist mit der Halterung der Stoßstange komplementär und durch die Verbindung dieser Halterungen wird der Scheinwerfer von der ersten Randlage in die zweite Randlage in Richtung der y-Achse zur x-Achse (also zur Mitte hin, zur Null auf der y-Achse), also von rechts oder links in Richtung zur Längsachse des Fahrzeugs bewegt. Diese Halterungen können auf verschiedene Weise ausgeführt werden, die vom Fachmann nach seinem Ermessen ausgewählt werden kann. Vorteilhafterweise umfassen sie schräge Flächen, wodurch beim Zurückziehen der Stoßstange nach hinten aufgrund der geneigten Ebene eine Links-Rechts-Kraft auf den Scheinwerfer ausgeübt wird. Dies hat den Vorteil, dass das Anziehen der Scheinwerfer automatisch nur durch das Aufsetzen der Stoßstange auf die dafür vorgesehene Stelle erfolgt.

Alternativ können auch andere Mechanismen als Halterungen verwendet werden, bei denen der Scheinwerfer an der Stoßstange festgehalten wird und dann der Mechanismus aktiviert wird - durch Ziehen der Zugstange, Festziehen der flexiblen Öse u.ä., wodurch der Scheinwerfer an die Stoßstange gezogen wird und somit die Montagelücke zwischen ihnen abgegrenzt wird.

Die erste Randlage des Scheinwerfers ist vorzugsweise eine Position, die weiter von der x-Achse entfernt ist, das heißt weiter von der Mitte des Fahrzeugs, also beim rechten Scheinwerfer ist es die Randlage rechts und beim linken Scheinwerfer ist es die Randlage links. Die zweite Randlage des Scheinwerfers liegt vorzugsweise näher an der x-Achse, also näher an der Längsachse des Fahrzeugs. Die erste Randlage und die zweite Randlage der Scheinwerfer werden durch die strukturelle Anordnung aller Bauteile des Zusammenbaus bestimmt, wie im Folgenden erläutert wird.

Die Scheinwerfer werden vorzugsweise zunächst in der ersten Randlage durch eine Schnappverbindung befestigt, die ihre Verschiebung in Richtung der y-Achse ermöglicht, dann werden sie durch die Montage der Stoßstange in die zweite Randlage in Richtung der y-Achse näher zur x-Achse, also näher zur Mitte des Fahrzeugs hin verschoben und anschließend durch eine Schraubverbindung fixiert.

Die Stoßstange wird standardmäßig nach der Montage der Scheinwerfer in das Fahrzeug eingebaut. Die Stoßstange wird am Fahrzeug in der Regel durch eine feste Schraubverbindung und/oder Schnappverbindungen mit Dorn, Klipp, Raste und ähnlichen gleichwertigen Verbindungselementen befestigt. Die Stoßstange gemäß der vorliegenden Erfindung umfasst vorteilhafterweise auch eine Maske.

Die Stoßstange wird vorzugsweise in Richtung der x-Achse von vorne nach hinten am Fahrzeug montiert. Die Stoßstange umfasst ein erstes Positionierungselement, das seine korrekte Position beim Aufsetzen auf den Rahmen festlegt und bei der Montage mit einem komplementären zweiten Positionierungselement verbunden wird, das sich am Rahmen befindet. Diese Positionierungselemente halten die Stoßstange bei der Montage in der richtigen Position am Rahmen. Dabei kann es sich um Verbindungselemente in Form von Dornen und komplementären Öffnungen, Klipps, Rasten, Haken, Schnappverbindungen und anderen gleichwertigen Verbindungen handeln. So kann beispielsweise das Verbindungselement an der Stoßstange ein Dorn sein und die komplementäre Öffnung für den Dorn kann am Rahmen sein oder umgekehrt. Die Stoßstange umfasst ferner mindestens eine Halterung der Stoßstange, die bei der Montage mit der Halterung des Scheinwerfers verbunden wird, darauf eine Kraft ausübt, um zu bewirken, dass sich der Scheinwerfer, wie oben beschrieben, von der ersten Randlage in die zweite Randlage bewegt.

Die Stoßstange wird vorzugsweise am Rahmen und an den Scheinwerfern mittels Positionierungselemente in Richtung der x-Achse von vorne nach hinten befestigt und wird nach der Befestigung mit Schraubverbindungen angezogen. Durch die Montage der Stoßstange rücken die Scheinwerfer vorteilhafterweise näher zusammen und näher an die Stoßstange selbst heran. Diese Verschiebung hat den Vorteil, dass der Prozess der Passung der Stoßstange und des Scheinwerfers vereinfacht wird. Die Scheinwerfer werden von der ersten Randlage, in der sie nur mit einer Schnappverbindung befestigt sind, in die zweite Randlage gebracht, in der sie dann mit Schraubverbindungen fixiert werden.

Die Halterungen sind vorzugsweise ein festes Bestandteil, insbesondere aus einem Stück gefertigt, mit der Stoßstange oder den Scheinwerfern (insbesondere den äußeren Abdeckungen) verbunden. Die Stoßstange kann zum Beispiel ein Kunststoff-Gussteil sein, und es ist zeit- und kosteneffizienter, sie in einem Arbeitsgang mit den Halterungen herzustellen. Ähnlich gilt es für die Fertigung der Scheinwerferabdeckungen, die aus einem Stück mit Halterungen gefertigt werden.

Die Bestandteile des Zusammenbaus - Rahmen, Scheinwerfer und die Stoßstange, umfassen eine Reihe von Elementen, die ein komplementäres Gegenstück an anderen Komponenten haben - Halterungen, Schnappelemente und Positionierungselemente. Alle diese Elemente können nach dem Ermessen des Fachmanns auf verschiedene Weise eingesetzt werden, und die Komplementarität der Elemente sorgt hier dafür, dass die entsprechenden Elemente zusammenwirken können - indem sie die Komponenten zueinander befestigen, ihre gegenseitige Position festlegen usw.

Bestandteile vom Zusammenbau können auch Montageschrauben für eine feste Verbindung der vorgenannten Komponenten sein.

Die Beweglichkeit der Schnappverbindung in der y-Achse kann insbesondere durch das Spiel eines oder beider der Schnappelemente in Richtung der y-Achse gewährleistet werden. Handelt es sich zum Beispiel bei einem der Elemente um eine Öffnung oder eine Aussparung, so kann diese Öffnung oder diese Aussparung in der y-Achse länglich sein bzw. es kann in Richtung der Achse länger sein als sein Gegenstück - ein Schnappklipp u.ä. Es ist auch möglich, eines der Schnappelemente als beweglich in der y-Achse zu fertigen usw.

Die Verschiebung der Scheinwerfer wird also vorzugsweise durch die Montage der Stoßstange verursacht. Die Stoßstange umfasst dann für jeden Scheinwerfer mindestens eine Halterung der Stoßstange, die durch Aufsetzen der Stoßstange in Richtung der x-Achse eine Kraft auf die Halterungen der Scheinwerfer ausübt und damit werden die Scheinwerfer in die zweite Randlage in Richtung der y-Achse bewegt. Dieser Vorgang kann den Prozess der Montage der Scheinwerfer und der Stoßstange vereinfachen, so dass diese Komponenten nicht separat eingestellt und ausgefluchtet werden müssen, sondern die Komponenten fluchten durch die Montage selbst miteinander. Dieser Zusammenbau und dessen Montage können auch dazu beitragen, die Montagelücken von der Fahrzeugfront zu verringern. Durch die Verschiebung der Scheinwerfer näher zueinander und näher an die Stoßstange können die Montagelücken deutlich verringert werden, was zu einer Verbesserung der ästhetischen und aerodynamischen Eigenschaften des Fahrzeugs beitragen kann und ebenfalls die Wetterfestigkeit erhöht. Nachdem die Stoßstange durch ihre Montage die Scheinwerfer in die zweite Randlage gebracht hat, die der gewünschten Passung entspricht, werden die Scheinwerfer und die Stoßstange mit festen Schraubverbindungen am Fahrzeug befestigt.

Vorzugsweise ist das erste Positionierungselement an der Stoßstange ein Dorn und das zweite Positionierungselement am Rahmen eine Öffnung für den Dorn.

Die Stoßstange kann mit Hilfe von Positionierungselementen am Rahmen befestigt werden. Das erste Positionierungselement kann sich an der Stoßstange befinden und das zweite Positionierungselement kann sich am Rahmen befinden. Vorzugsweise ist das erste Positionierungselement ein konisch geformter Dorn, der in das zweite Positionierungselement, die Öffnung für den Dorn, einrastet. Der Dorn kann auch Vorsprünge umfassen, die ihn in der richtigen Position relativ zum Rahmen durch Einrasten in der Öffnung sichern, wo sich die komplementären Nuten befinden können. Die Positionierungselemente sind für die Abgrenzung der korrekten Position der Stoßstange in Bezug auf den Fahrzeugrahmen bestimmt. Anschließend wird die Stoßstange fest mit dem Fahrzeug verbunden, zum Beispiel durch Schraubenverbindungen.

Das Schnappelement des Rahmens kann ein Element aus einem Paar vom Vorsprung und einer Aussparung sein, und das Schnappelement des Scheinwerfers kann das zweite Element aus einem Paar vom Vorsprung und einer Aussparunag sein.

Die Schnappverbindung des Scheinwerfers und des Rahmens umfasst die Schnappelemente des Scheinwerfers und die Schnappelemente des Rahmens. Bei den Schnappelementen kann es sich vorzugsweise um beliebige komplementäre Elemente aus dem Paar vom Vorsprung und Aussparung handeln. Der Vorsprung kann eine beliebige vorstehende Struktur sein, zum Beispiel ein Dorn, eine kugelförmige Raste, eine Zungenraste, eine Federraste oder ein Klipp in Form einer Zunge, eines Kamms, ein U-Klipp, ein T-Klipp, ein Abstandsklipp und andere. Die Aussparung kann ein beliebiges Element sein, das zum Vorsprung komplementär ist, also eine Vertiefung, eine Öffnung, es kann nur eine Vertiefung in der Oberfläche oder eine Durchgangsöffnung durch das Material sein. Die Aussparung ist also ein beliebiges Element, in das ein Vorsprung einrastet. Die Schnappverbindung kann auch Magnete oder andere Verbindungselemente umfassen. Der Vorsprung kann sich am Scheinwerfer und die Aussparung am Rahmen befinden, oder auch umgekehrt.

Das Schnappelement des Scheinwerfers ist vorzugsweise ein Klipp und das Schnappelement des Rahmens ist eine komplementäre Öffnung zum Einrasten des Klipps. Das Schnappelement des Rahmens umfasst vorteilhafterweise eine Verbreiterung für die Bewegung des Klipps entlang der y-Achse.

Die Verbreiterung des Schnappelements des Rahmens beträgt vorzugsweise 2-5 mm.

Das Schnappelement des Scheinwerfers ist vorzugsweise als ein Zungenklipp aus Kunststoff ausgelegt und das Schnappelement des Rahmens ist eine komplementäre Öffnung zum Einrasten dieses Klipps. So können die Scheinwerfer bei der Montage einfach in den Fahrzeugrahmen eingerastet werden.

Das Schnappelement des Rahmens ist daher vorzugsweise eine Öffnung für den Klipp. Diese Öffnung umfasst ferner vorzugsweise eine Verbreiterung. Die Öffnung für den Klipp ist daher breiter als der Klipp. Die Verbreiterung befindet sich näher an der x-Achse, also an der Längsachse des Fahrzeugs, also an dessen Mitte. Der Klipp kann sich also in der Öffnung in Richtung der y-Achse näher zur x-Achse bewegen, anders ausgedrückt zum Punkt y = 0. In sonstigen Richtungen bewegt sich der Klipp in der Öffnung nach dem Einrasten nicht mehr. Die Abmessung der Verbreiterung beträgt vorzugsweise 2-5 mm. Dieser Abstand ist adäquat für die Verengung der Montagelücken an der Fahrzeugfront.

Die erste Randlage des Scheinwerfers und die zweite Randlage des Scheinwerfers werden also vorzugsweise durch die Verbreiterung des Schnappelements des Rahmens und durch die Bewegung des Schnappelements des Scheinwerfers innerhalb dieser Verbreiterung definiert.

Die Halterung der Stoßstange und/oder die Halterung des Scheinwerfers umfassen vorzugsweise eine Schräge für das Verschieben des Scheinwerfers in Richtung der y-Achse zur x-Achse.

Bei der Befestigung der Stoßstange am Rahmen in Richtung der x-Achse von vorne nach hinten verbindet sich die Halterung der Stoßstange mit der Halterung des Rahmens. Die Schräge bewirkt vorzugsweise eine Kraftwirkung, die die Scheinwerfer näher an die Längsmittelachse des Fahrzeugs verschiebt. Die Schräge kann sich an einer oder beiden Halterungen befinden und kann so ausgerichtet sein, dass die Stoßstange beim Aufsetzen auf den Rahmen die Scheinwerfer zusammenzieht oder zusammendrückt.

Vorzugsweise kann die Halterung der Stoßstange die Form eines Dorns haben. Bei der Montage der Stoßstange rastet dieser Dorn in die Halterung des Scheinwerfers ein, die vorzugsweise eine Öffnung mit einer zur Form des Dorns komplementären Form ist. Die Halterung der Stoßstange weist dann vorzugsweise eine Schräge auf, wodurch dieser abgeschrägte Dorn eine Kraft auf die komplementäre Öffnung im Scheinwerfer ausübt, wodurch der Scheinwerfer von der ersten Randlage rechts oder links in die zweite Randlage näher zur Längsachse des Fahrzeugs bewegt wird. Die Richtung der Kraftwirkung der Halterung der Stoßstange auf die Halterung des Scheinwerfers verläuft in Richtung der y-Achse zur x-Achse, also von links oder rechts in Richtung der Längsmittelachse des Fahrzeugs, anders ausgedrückt entlang der y-Achse in Richtung zum Punkt y = 0.

Die Mängel der aus dem Stand der Technik bekannten Lösungen werden gewissermaßen durch Verfahren zur Montage der Scheinwerfer und der Stoßstange eines Fahrzeugs beseitigt, in dem die Scheinwerfer zuerst am Rahmen durch eine Schnappverbindung befestigt werden. Danach wird die Stoßstange am Rahmen und an den Scheinwerfern in Richtung der x-Achse befestigt. Die Befestigung der Stoßstange am Rahmen erfolgt durch die Verbindung des ersten Positionierungselements und des zweiten Positionierungselements. Die Befestigung der Stoßstange an den Scheinwerfern erfolgt durch die Verbindung der Halterungen der Stoßstange und der Halterungen der Scheinwerfer, wobei durch die gegenseitige Krafteinwirkung der Halterungen die beiden Scheinwerfer in Richtung der y-Achse näher an die x-Achse bewegt werden. Die Scheinwerfer sind anschließend am Rahmen mittels einer Schraubverbindung befestigt und die Stoßstange ist ebenfalls am Rahmen befestigt, zum Beispiel durch eine Schraubverbindung.

Bei diesem Verfahren kann der oben beschriebene erfindungsgemäße Zusammenbau verwendet werden. Die Montage der Scheinwerfer und der Stoßstange lässt sich daher vorzugsweise wie folgt durchführen:
- Die Scheinwerfer werden zunächst in der ersten Randlage mit einer Schnappverbindung am Rahmen befestigt. Vorzugsweise umfasst die Schnappverbindung mindestens einen Klipp und mindestens eine komplementäre Öffnung für den Klipp oder eine ähnliche Alternative von Schnappelementen, wie oben beschrieben. In der ersten Randlage ist der Scheinwerfer in der Links-Rechts-Richtung entlang der y-Achse beweglich und in den sonstigen Richtungen ist er entlang der x- und z-Achsen unbeweglich. Die Beweglichkeit des Scheinwerfers in der ersten Randlage wird durch die Verbreiterung der Schnappelemente ermöglicht. Die Verbreiterung ist eine Lücke im Schnappelement, die die Bewegung des Scheinwerfers in seiner Schnappverbindung in Richtung der y-Achse zur x-Achse ermöglicht, also zur Längsmittelachse des Fahrzeugs, also von den Seiten zur Mitte, anders ausgedrückt entlang der y-Achse zum Punkt y = 0.
- Nachdem die Scheinwerfer mit einer Schnappverbindung am Rahmen befestigt wurden, wird die Stoßstange am Rahmen befestigt. Die Stoßstange wird vorzugsweise mit einem ersten und einem zweiten Positionierungselement in Richtung der x-Achse von vorne nach hinten am Rahmen aufgesetzt. Das erste und das zweite Positionierungselement können zum Beispiel ein Paar bestehend aus einem Dorn und einer Öffnung für den Dorn oder andere beliebige Verbindungselemente mit einer gleichwertigen Funktion sein. Dadurch wird die Stoßstange in die richtige Position zum Rahmen gebracht. Die Stoßstange umfasst ferner mindestens eine Halterung der Stoßstange für jeden Scheinwerfer. Die Halterungen der Stoßstange werden im Verlaufe der Befestigung am Rahmen mit den Halterungen der Scheinwerfer verbunden und üben eine Kraft aufeinander aus. Diese Verbindung bewirkt die Verschiebung des Scheinwerfers in Richtung der y-Achse zur x-Achse, also seitlich zur Längsmittelachse des Fahrzeugs, wie oben beschrieben. Auf diese Weise werden die Scheinwerfer von der ersten Randlage zur zweiten Randlage näher zusammengebracht. Die Verschiebung der Scheinwerfer wird durch die Verbreiterung der Schnappelemente definiert.

- Nachdem die Stoßstange in der richtigen Position am Rahmen befestigt wurde und die Scheinwerfer in die zweite Randlage gebracht wurden, wird die Stoßstange mit dem Rahmen und dem Rest der Karosserie mittels einer Schraubverbindung befestigt.
- Nach der Befestigung der Stoßstange befinden sich die Scheinwerfer in der zweiten Randlage. Vorzugsweise, in dieser Position ist die Positionierung und die Passung der Scheinwerfer und der Stoßstange optimal und die Montagelücken zwischen der Stoßstange und den Scheinwerfern minimiert werden können. Die Scheinwerfer werden in der zweiten Randlage mit herkömmlichen Schraubverbindungen durch Montageöffnungen an den Scheinwerfern und am Rahmen sowie mit den Montageschrauben am Fahrzeug befestigt.
- Die Befestigung der Stoßstange durch eine Schraubverbindung kann erforderlichenfalls erst nach der Befestigung der Scheinwerfer in der zweiten Randlage erfolgen.
- Die Befestigung der Scheinwerfer und der Stoßstange mit Schraubverbindungen erfolgt auf jede in der Automobilindustrie übliche Weise.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
Fig. 1 eine Darstellung eines Zusammenbaus aus einem Rahmen, Scheinwerfern und einer Stoßstange vor der Montage der Stoßstange, die Stoßstange ist nicht am Rahmen und den Scheinwerfern befestigt;
Fig. 2 eine Darstellung eines Zusammenbaus aus einem Rahmen, Scheinwerfern und einer Stoßstange nach der Montage der Stoßstange, die Stoßstange ist am Rahmen und den Scheinwerfern befestigt;
Fig. 3 eine Darstellung eines Details der Stoßstange und des Scheinwerfers mit hervorgehobenen Halterungen der Stoßstange und des Scheinwerfers;
Fig. 4 eine Darstellung eines Zusammenbaus aus einem Rahmen, einer Stoßstange und Scheinwerfern vor der Montage mit markierten Richtungen der Montage und der Verschiebung des Scheinwerfers;
Fig. 5 eine Darstellung des vertikalen Schnitts durch die Stoßstange und den Scheinwerfer in Richtung der x-Achse mit sichtbaren Halterungen der Stoßstange und des Scheinwerfers;
Fig. 6 eine Darstellung des vereinfachten Schemas des vorderen Teils des Fahrzeugs in der Draufsicht mit markierten Halterungen der Stoßstange und einem Positionierungselement der Stoßstange und der Richtung der Verschiebung der Scheinwerfer;
Fig. 7 eine Darstellung des vereinfachten Schemas der Halterung der Stoßstange und der Halterung des Scheinwerfers mit der markierten Schräge, der Bewegung der Montage und der Bewegung der Verschiebung des Scheinwerfers;
Fig. 8 im Schema des Zusammenbaus markierte Stellen für die Schnappelemente der Scheinwerfer;
Fig. 9 im Schema des Zusammenbaus markierte Stellen für die Montageöffnungen der Scheinwerfer;
Fig. 10 im Detail des linken Scheinwerfers die markierten Stellen A und B für die Klipps und die Stelle C für den Stift;
Fig. 11 und Fig. 12 eine Darstellung des Details des Klipps an der Stelle A;
Fig. 13 und Fig. 14 eine Darstellung des Details des Klipps an der Stelle B; und
Fig. 15 eine Darstellung des Details des Stifts an der Stelle C.

### Ausführungsbeispiele der Erfindung

Die Erfindung wird anhand von Ausführungsbeispielen unter Bezugnahme auf die entsprechenden Zeichnungen näher erläutert.

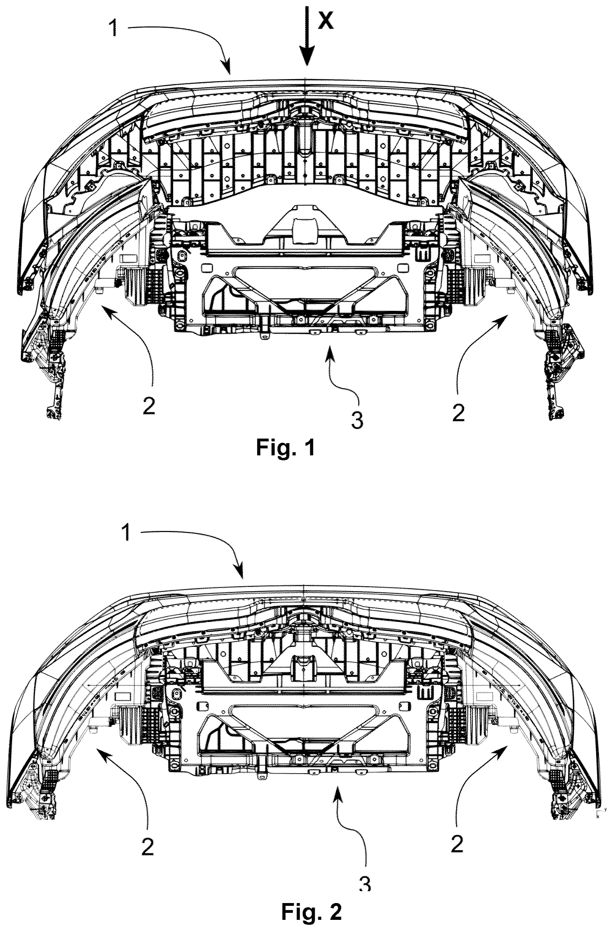

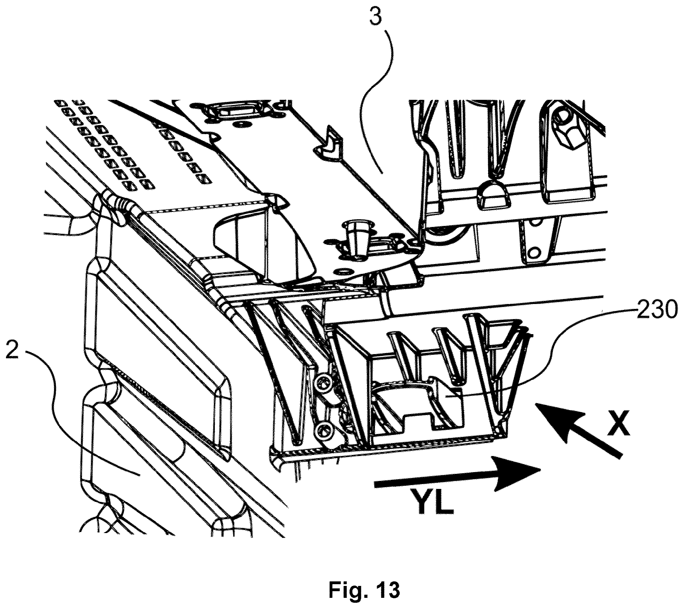

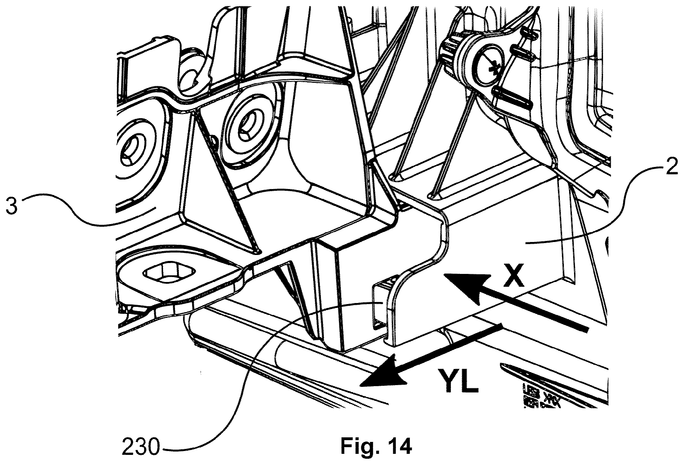

Ein erstes Ausführungsbeispiel der Erfindung ist in den Fig. 1 bis 15 dargestellt. In der Fig. 1 und Fig. 2 ist ein Zusammenbau für eine Montage von Scheinwerfern 2 eines Fahrzeugs, umfassend einen Rahmen 3, zwei Scheinwerfer 2 und eine Stoßstange 1 dargestellt. Die Fig. 1 zeigt die Stoßstange 1 in der Position am Anfang der Montage, also nicht befestigt am Rahmen 3 und an den Scheinwerfern 2, und die Fig. 2 zeigt die Stoßstange 1 in der Position am Ende der Montage, angeschlossen am Rahmen 3 und an den Scheinwerfern 2. Die Stoßstange 1 wird in der durch den Pfeil markierten X-Richtung am Fahrzeug befestigt, also in Richtung der x-Achse von vorn nach hinten.

Die Montage des Zusammenbaus verläuft so, dass zunächst die Scheinwerfer 2 am Rahmen 3 mit Hilfe der Schnappverbindung in die erste Randlage befestigt werden, anschließend wird die Stoßstange 1 in X-Richtung auf den Rahmen 3 aufgesetzt. Durch Aufsetzen der Stoßstange 1 verschieben sich die Scheinwerfer 2 von der ersten Randlage in die zweite Randlage in Richtung der y-Achse zur x-Achse. Anschließend werden die Scheinwerfer 2 in der zweiten Randlage am Rahmen 3 durch eine Schraubverbindung befestigt und die Stoßstange 1 wird am Rahmen 3 ebenfalls durch eine Schraubverbindung befestigt. Die Befestigung der Scheinwerfer 2 und der Stoßstange 1 durch Schraubverbindungen erfolgt in der in der Automobilindustrie üblichen Weise.

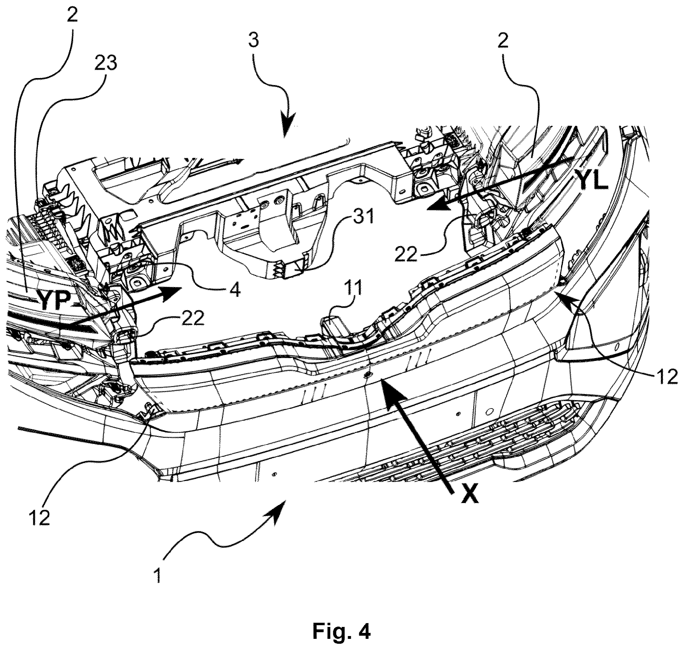

Der Rahmen 3 des Fahrzeugs ist eine Tragstruktur, an der zunächst die Scheinwerfer 2 und dann die Stoßstange 1 montiert werden. Der Rahmen 3 im ersten Ausführungsbeispiel (Fig. 4) umfasst Schnappelemente 33 des Rahmens 3 zur Befestigung der Scheinwerfer 2 in die erste Randlage und ein zweite Positionierungselement 31 zum Befestigen der Stoßstange 1 durch Aufschieben. Der Rahmen 3 umfasst ferner Montageöffnungen 4 für die Befestigung der Scheinwerfer 2 in der zweiten Randlage und für die Befestigung der Stoßstange 1 mit Hilfe von Schraubverbindungen.

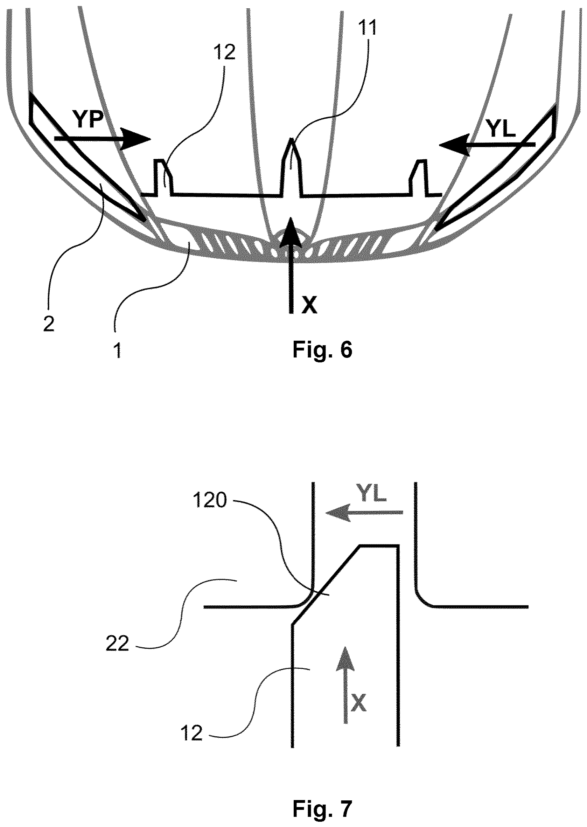

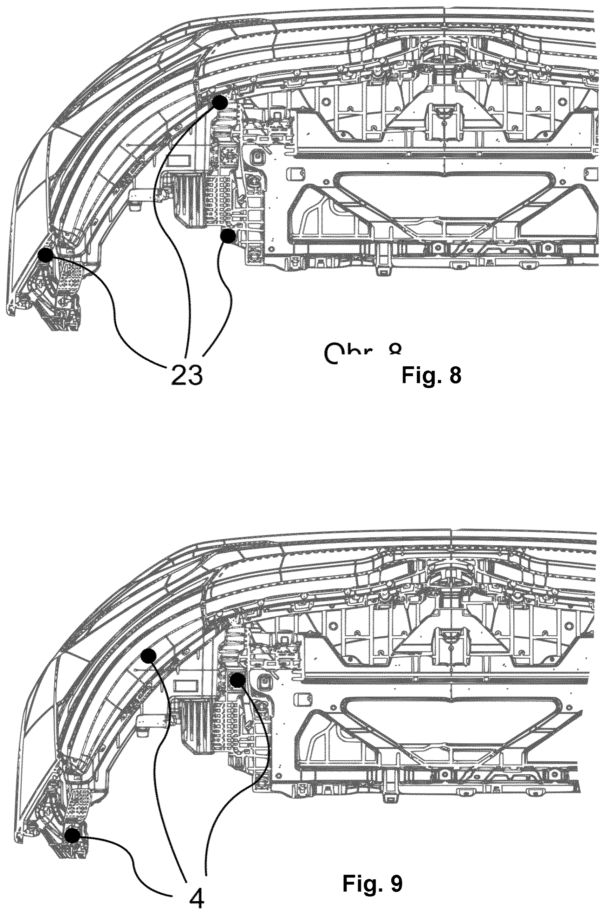

Die Scheinwerfer 2 werden im ersten Ausführungsbeispiel zunächst am Rahmen 3 in die erste Randlage durch eine Schnappverbindung und anschließend werden sie in der zweiten Randlage durch eine Schraubverbindung befestigt. Die Verschiebung von der ersten Randlage in die zweite Randlage erfolgt durch Aufsetzen der Stoßstange 1 (Fig. 4, Fig. 6). Die Schnappverbindung des Scheinwerfers 2 und des Rahmens 3 wird durch Schnappelemente 23 des Scheinwerfers 2 an drei Stellen ausgeführt und die Schraubverbindung des Scheinwerfers 2 und des Rahmens 3 wird durch Montageöffnungen 4 und Schrauben ebenfalls an drei Stellen ausgeführt. Die Schnappelemente 23 des Scheinwerfers 2 sind in der Fig. 8 schematisch dargestellt und die Montageöffnungen 4 des Scheinwerfers 2 für die Schraubverbindung sind in der Fig. 9 schematisch dargestellt.

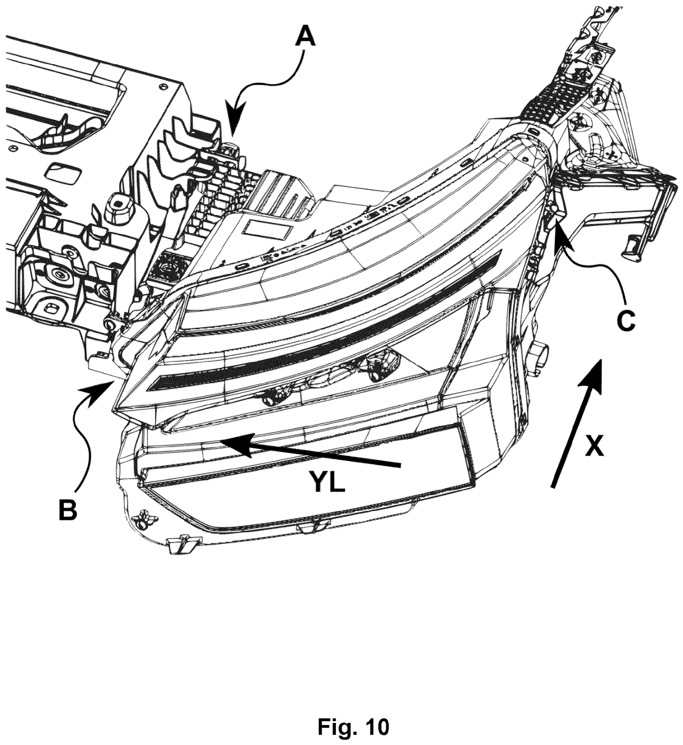

Zur besseren Orientierung sind die Richtungen in den Fig. 10 bis Fig. 15 durch Pfeile gekennzeichnet: die X-Richtung ist die Richtung der Montage der Stoßstange 1 am Fahrzeug, also in Richtung der x-Achse von vorn nach hinten, und die YL-Richtung ist die Verschiebung des dargestellten linken Scheinwerfers 2 in die zweite Randlage, also in Richtung der y-Achse näher zur x-Achse, also von links zur Mitte.

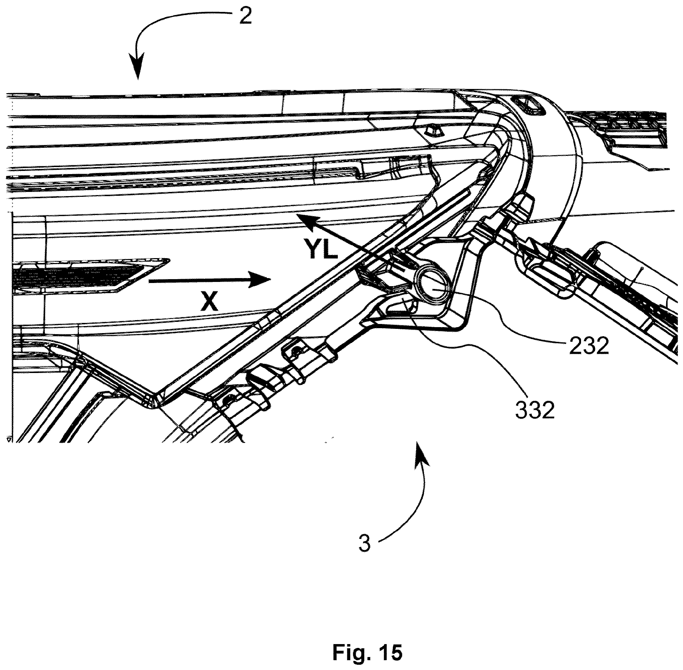

Die Anordnung der Schnappelemente 23 des Scheinwerfers 2 und der Schnappelemente 33 des Rahmens 3 an den Stellen A, B und C für die erste Ausführung ist in der Fig. 10 detailliert dargestellt, in der der linke Scheinwerfer 2 dargestellt ist. Die Schnappelemente 23 des Scheinwerfers 2 sind zwei Klipps 230 an den Stellen A und B, die beide zungenförmig sind, und ein Stift 231 an der Stelle C. An den Stellen A und B sind die Klipps 230 ein Bestandteil des Kunststoffgehäuses des Scheinwerfers 2. Sie haben die Form einer Zunge mit einem flexiblen Element. Ein Klipp 230 befindet sich an der Stelle A, also im hinteren Bereich des Gehäuses des Scheinwerfers 2 (Fig.10, Fig.11, Fig.12) und der zweite Klipp 230 befindet sich an der Stelle B, also im vorderen Bereich des Gehäuses des Scheinwerfers 2 an dessen Unterseite (Fig. 10, Fig. 13, Fig. 14). An der Stelle C, also im Seitenbereich des Scheinwerfers 2 befindet sich ein Stift 231, der die Form einer Rolle hat (Fig. 10, Fig. 15).

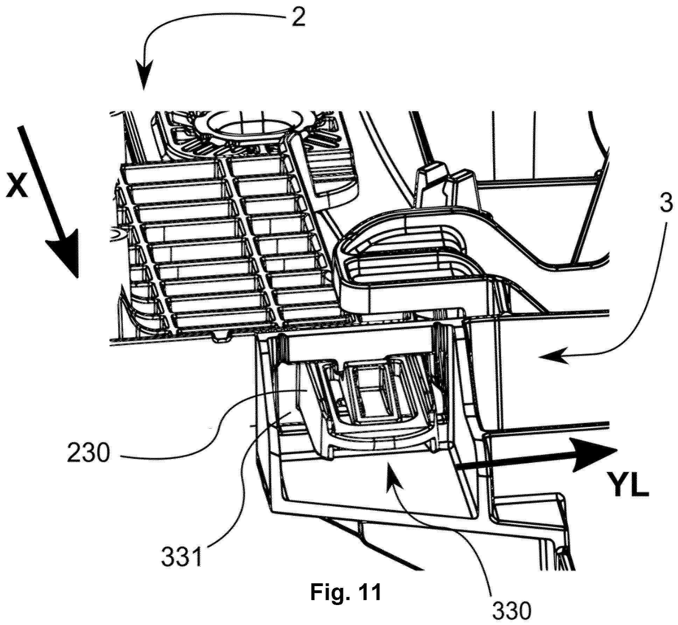

Die Schnappelemente 33 des Rahmens 3 sind dann zwei Öffnungen 330 für den Klipp 230 an den Stellen A und B und eine flexible Raste 332 zum Einrasten am Stift 231 an der Stelle C. Die Details der Schnappelemente sind in den Fig. 11 bis Fig. 15 dargestellt und werden im Folgenden beschrieben.

Die Schnappelemente 23 des Scheinwerfers 2 und die Schnappelemente 33 des Rahmens 3 ermöglichen die Bewegung des Scheinwerfers 2 in der Links-Rechts-Richtung, also entlang der y-Achse (Fig. 4, Fig. 6). Die Bewegung in den anderen Richtungen, also von oben nach unten und von vorne nach hinten, lässt diese Verbindung nicht zu.

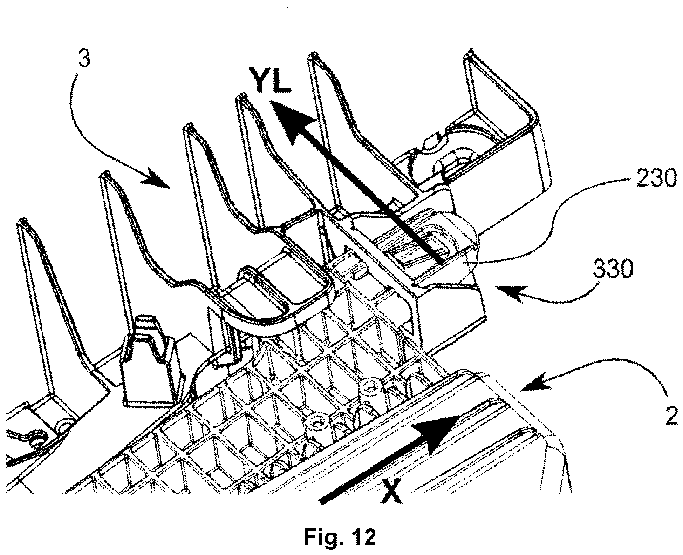

Für die Schnappverbindungen an den Stellen A und B wird die Bewegung des Scheinwerfers in YL-Richtung wie folgt ermöglicht (Fig. 11, 12, 13, 14): Die Klipps 230 des Scheinwerfers 2 werden in die Öffnungen 330 für Klipps 230 im Rahmen 3 eingerastet. Die Öffnungen 330 für die Klipps 230 enthalten eine horizontale Verbreiterung 331 auf der Seite, die sich näher an der Mitte des Fahrzeugs befindet (Fig. 11), wodurch die Bewegung des Klipps 230 entlang der y-Achse in Richtung der der x-Achse näheren Seite möglich wird, also in Richtung der Mitte und hat eine Größe von etwa 2,8 mm. Diese Verbreiterung 331 ermöglicht eine zentripetale Bewegung der Scheinwerfer 2 um 2,8 mm. Einfach ausgedrückt, die Öffnungen 330 für die Klipps 230 sind um 2,8 mm breiter als die Klipps 230 an der Stelle näher zur Längsmittelachse des Fahrzeugs. (Fig. 11, Fig. 12). Maximale Verschiebung des Scheinwerfers 2 in YL-Richtung wird an den Stellen A und B durch die Verbreiterungen 331 abgegrenzt.

Für die Schnappverbindung an der Stelle C wird die Bewegung des Scheinwerfers 2 wie folgt ermöglicht (Fig. 15): Die Raste 332 wird durch am Stift 231 in Form einer Rolle eingerastet. Der Stift 231 wird in der Position durch die Raste gehalten und ist gleichzeitig relativ zur Raste im Rahmen 3 in der YL-Richtung verschiebbar.

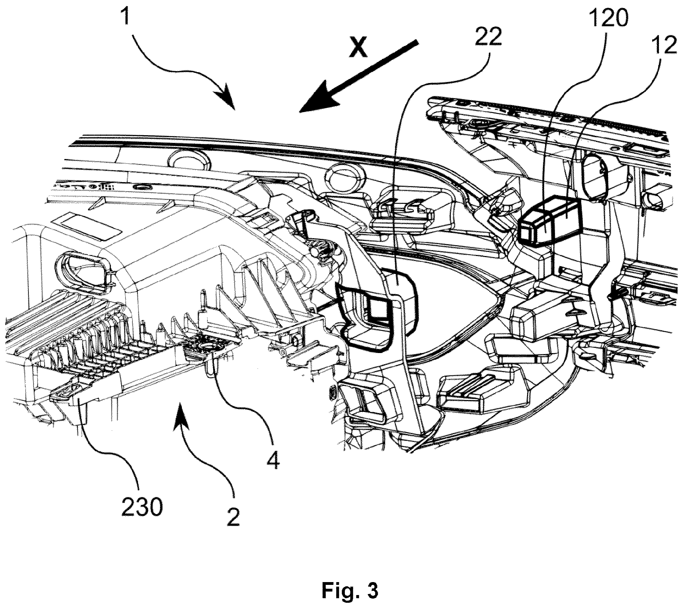

Die Scheinwerfer 2 umfassen ferner eine Halterung 22 des Scheinwerfers 2, der dazu dient, sie von einer ersten Randlage in eine zweite Randlage zu führen und zu bewegen. Die Halterung 22 des Scheinwerfers 2 ist in der ersten Ausführung eine Öffnung für die Halterung 12 der Stoßstange 1. Die Halterung 12 der Stoßstange 1 hat die Form eines abgeschrägten Dorns zum Einschieben in die Öffnung (Fig. 3).

Nach der Befestigung der Scheinwerfer 2 am Rahmen 3 durch die Schnappverbindung wird am Rahmen 3 die Stoßstange 1 in X-Richtung befestigt, wie oben beschrieben. Zur Befestigung der Stoßstange 1 in der ersten Ausführung dient das erste Positionierungselement 11 in Form eines Dorns, der in das zweite Positionierungselement 31 in Form einer Öffnung am Rahmen 3 eingesetzt wird (Fig. 4).

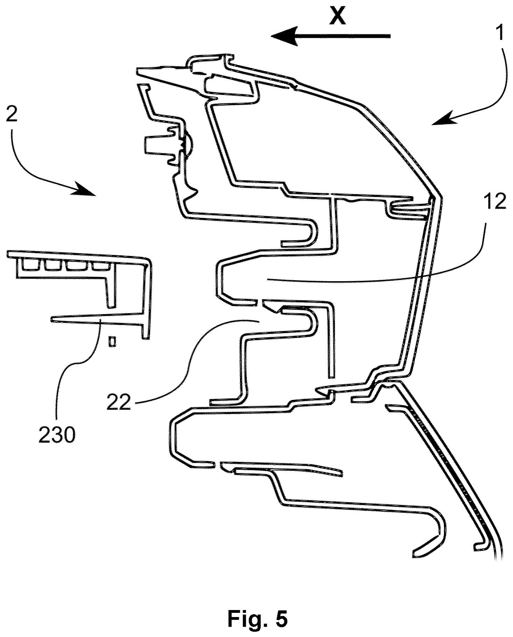

Die Halterung 12 der Stoßstange 1 hat die Form eines abgeschrägten Dorns. Bei der Montage der Stoßstange 1 werden die Halterungen 12 der Stoßstange 1 (Dorne) in die Halterungen 22 der Scheinwerfer 2 (Öffnungen) eingeführt. Der vertikale Schnitt durch die Halterung 12 der Stoßstange 1 und die Halterung 22 des Scheinwerfers 2 ist in der Fig. 5 dargestellt. Die Halterungen 12 der Stoßstange 1 umfassen eine Schräge 120. Diese Schräge 120 bewirkt die Bewegung der Scheinwerfer 2 von der ersten Randlage in die zweite Randlage, so dass beim Einschieben der Halterung 12 der Stoßstange 1 in die Halterung 22 des Scheinwerfers 2 die Schräge 120 eine Kraft auf die Innenwand der Halterung 22 des Scheinwerfers 2 in Richtung der y-Achse näher zur x-Achse ausübt, also von den Seiten des Fahrzeugs in Richtung seiner Mittellängsachse. Diese Verschiebung ist in den Fig. 4 und 6 dargestellt, wobei es sich im Falle des rechten Scheinwerfers 2 um die YP-Bewegung handelt und im Falle des linken Scheinwerfers 2 handelt es sich um die YL-Bewegung, die durch die Pfeile markiert ist. Die Figur 7 zeigt schematisch ein Detail der Schräge 120 der Halterung 12 der Stoßstange 1, dessen Einsetzen in die Halterung 22 des Scheinwerfers 2 und die Verschiebung in YL-Richtung für den linken Scheinwerfer 2. Das Aufsetzen der Stoßstange 1 am Rahmen 3 führt daher zu einer Verschiebung der Scheinwerfer 2 in Richtung von den Seiten her näher zueinander um etwa 2,8 mm. Dank dieser Verschiebung werden die Scheinwerfer 2 näher an die Stoßstange 1 gebracht und die Montagelücken an der Fahrzeugfront werden verringert.

Nach der Befestigung der Stoßstange 1 und nach der gleichzeitigen Verschiebung der Scheinwerfer 2 von der ersten Randlage in die zweite Randlage werden die Scheinwerfer 2 am Rahmen 3 in der zweiten Randlage mit Hilfe der Schraubverbindungen befestigt, deren Anordnung in der Fig. 9 schematisch dargestellt ist. Nach der Befestigung der Scheinwerfer 2 folgt die Befestigung der Stoßstange 1 am Rahmen 3 ebenfalls mit Schraubverbindungen. Die Schraubverbindungen für die Stoßstange sind auf den Zeichnungen nicht dargestellt, sie sind in der in der Automobilindustrie üblichen Weise ausgeführt.

Das zweite Ausführungsbeispiel der Erfindung ist analog zur ersten Ausführung, mit dem Unterschied, dass es hier zwei Schnappverbindungen des Scheinwerfers 2 mit dem Rahmen 3 gibt. Das Schnappelement 23 des Scheinwerfers 2 ist bei der zweiten Ausführung eine Öffnung 330 für den Klipp 230 und das Schnappelement 33 des Rahmens 3 ist der Klipp 230. Die Montage erfolgt in dieser Ausführung wie folgt: Die Scheinwerfer 2 werden am Rahmen 3 mit einer Schnappverbindung befestigt, dann wird am Rahmen 3 die Stoßstange 1 befestigt, wobei sie die Scheinwerfer 2 gleichzeitig von der ersten Randlage in die zweite Randlage bewegen. Anschließend wird die Stoßstange 1 am Rahmen 3 mit Schraubverbindungen in der üblichen Weise befestigt und dann werden die Scheinwerfer 2 am Rahmen 3 in der zweiten Randlage ebenfalls durch Schraubverbindungen befestigt.

Das dritte Ausführungsbeispiel der Erfindung ist ein Verfahren zur Montage von Scheinwerfern 2 eines Fahrzeugs, bei dem die Scheinwerfer 2 am Rahmen 3 durch eine Schnappverbindung befestigt werden, anschließend wird die Stoßstange 1 am Fahrzeug befestigt und die Scheinwerfer 2 sowie die Stoßstange 1 werden anschließend am Fahrzeug mit Schraubverbindungen befestigt. Dieses Montageverfahren ist im ersten Ausführungsbeispiel der Erfindung detailliert beschrieben.

### Bezugszeichenliste

1 - Stoßstange
11 - Erstes Positionierungselement
12 - Halterung der Stoßstange
120 - Schräge
2 - Scheinwerfer
22 - Halterung des Scheinwerfers
23 - Schnappelement des Scheinwerfers
230 - Klipp
232 - Stift
3 - Rahmen
31 - Zweites Positionierungselement
33 - Schnappelement des Rahmens
330 - Öffnung für den Klipp
331 - Verbreiterung
332 - Raste
4 - Montageöffnung

## Patentansprüche

1. Zusammenbau zur Montage von Scheinwerfern (2) und einer Stoßstange (1) eines Fahrzeugs, der einen vorderen Rahmen (3), eine vordere Stoßstange (1) und zwei Scheinwerfer (2) umfasst, wobei
a. die Stoßstange (1) ein erstes Positionierungselement (11) zur Abgrenzung einer Position relativ zum Rahmen (3) umfasst und der Rahmen (3) ein zweites Positionierungselement (31) komplementär zum ersten Positionierungselement (11) umfasst, wobei
b. der Rahmen (3) ferner für jeden Scheinwerfer (2) mindestens ein Schnappelement (33) des Rahmens (3) zur Befestigung des Scheinwerfers (2) und für jeden Scheinwerfer (2) mindestens eine Montageöffnung (4) für eine Montageschraube umfasst, wobei
c. jeder Scheinwerfer (2) mindestens ein Schnappelement (23) des Scheinwerfers (2) zur Verbindung mit dem Schnappelement (33) des Rahmens (3) umfasst und jeder Scheinwerfer (2) ferner mindestens eine Montageöffnung (4) für eine Montageschraube umfasst, wobei
**dadurch gekennzeichnet, dass**
• die Verbindung des Schnappelements (33) des Rahmens (3) und des Schnappelements (23) des Scheinwerfers (2) nach dem Einrasten festsitzend in Richtung der x- und z-Achsen ist und beweglich in Richtung der y-Achse ist, wo die x-Achse die Längsachse, die y-Achse die Querachse und die z-Achse die Vertikalachse ist, wobei
• die Stoßstange (1) ferner für jeden Scheinwerfer (2) mindestens eine Halterung (12) der Stoßstange (1) zum Befestigen des Scheinwerfers (2) und zum Anziehen desselben in Richtung der y-Achse zur x-Achse umfasst, wobei
• jeder Scheinwerfer (2) mindestens eine Halterung (22) des Scheinwerfers (2) umfasst, die komplementär zur Halterung (12) der Stoßstange (1) ist.

2. Zusammenbau zur Montage von Scheinwerfern (2) und der Stoßstange (1) eines Fahrzeugs nach Anspruch 1, **dadurch gekennzeichnet, dass** das erste Positionierungselement (11) an der Stoßstange (1) ein Dorn ist und das zweite Positionierungselement (31) am Rahmen (3) eine Öffnung für den Dorn ist.

3. Zusammenbau zur Montage von Scheinwerfern (2) und der Stoßstange (1) eines Fahrzeugs nach Anspruch 1 oder 2, **dadurch gekennzeichnet, dass** das Schnappelement (33) des Rahmens (3) das eine Element des Paares von Vorsprung und Aussparung ist und das Schnappelement (23) des Scheinwerfers (2) das zweite Element des Paares von Vorsprung und Aussparung ist.

4. Zusammenbau zur Montage von Scheinwerfern (2) und der Stoßstange (1) eines Fahrzeugs nach einem der vorhergehenden Ansprüche, **dadurch gekennzeichnet, dass**
a. das Schnappelement (23) des Scheinwerfers (2) ein Klipp (230) ist und das Schnappelement (33) des Rahmens (3) eine komplementäre Öffnung (330) zum Einrasten des Klipps (230) ist, wobei
b. das Schnappelement (33) des Rahmens (3) eine Verbreiterung (331) zur Bewegung des Klipps (230) in Richtung der y-Achse umfasst.

5. Zusammenbau zur Montage von Scheinwerfern (2) und der Stoßstange (1) eines Fahrzeugs nach Anspruch 4, **dadurch gekennzeichnet, dass** die Verbreiterung (331) des Schnappelements (33) des Rahmens (3) 2-5 mm beträgt.

6. Zusammenbau zur Montage von Scheinwerfern (2) und der Stoßstange (1) eines Fahrzeugs nach einem der vorhergehenden Ansprüche, **dadurch gekennzeichnet, dass** die Halterung (12) der Stoßstange und/oder die Halterung (22) des Scheinwerfers eine Schräge (120) zum Verschieben des Scheinwerfers (2) in Richtung der y-Achse zur x-Achse umfasst.

7. Verfahren zur Montage von Scheinwerfern (2) und der Stoßstange (1) eines Fahrzeugs am vorderen Rahmen (3) des Fahrzeugs, **dadurch gekennzeichnet, dass**
• die Scheinwerfer (2) zunächst mit einer Schnappverbindung am Rahmen (3) befestigt werden, wobei
• dann die Stoßstange (1) am Rahmen (3) und gleichzeitig an den Scheinwerfern (2) befestigt werden, wobei
• die Befestigung der Stoßstange (1) an dem Rahmen (3) die Verbindung eines ersten Positionierungselements (11) an der Stoßstange (1) und eines zweiten Positionierungselements (31) an dem Rahmen (3) umfasst, und
• die Befestigung der Stoßstange (1) an den Scheinwerfern (2) die Verbindung der Halterungen (12) der Stoßstange (1) und der Halterungen (22) der Scheinwerfer (2) umfasst, wobei die beiden Scheinwerfer (2) durch gegenseitige Krafteinwirkung der Halterungen in Richtung der y-Achse näher zur x-Achse bewegt werden, wobei
• die Scheinwerfer (2) anschließend durch eine Schraubverbindung am Rahmen (3) befestigt werden und
• die Stoßstange (1) am Rahmen (3) befestigt wird.
